# EUROPÄISCHE PATENTANMELDUNG

(11) **EP 0 564 707 A1**
(43) Veröffentlichungstag der Anmeldung: **13.10.1993**
(21) Anmeldenummer: 92120026.7
(22) Anmeldetag: 25.11.1992
(51) Int. Cl.: C03B 37/012, C03B 19/01, C03B 17/04

(54) **Verfahren und Vorrichtung zur Herstellung eines Verbundkörpers aus Glas**

(30) Priorität: 10.04.1992 DE 4212099
(71) Anmelder: Heraeus Quarzglas GmbH, D-63405 Hanau (DE)
(72) Erfinder: Leber, Helmut, Dr., W-6450 Hanau 1 (DE)
(74) Vertreter: Grimm, Ekkehard

(57) **Zusammenfassung**

Es sind Verfahren zur Herstellung eines länglichen Verbundkörpers aus Glas durch Erschmelzen mindestens zweier in ihrer Materialzusammensetzung unterschiedlicher Ausgangsmaterialien, Zuführen der Ausgangsmaterialien zu einer am Boden eines äußeren Schmelztiegels angeordneten Ziehdüse und kontinuierliches und vertikales Abziehen der Schmelzen aus der Ziehdüse unter Bildung eines quer zur Ziehrichtung geschichteten Verbundkörpers bekannt. Um bei einem derartigen Verfahren die Herstellung einer von Verunreinigungen freien Grenzfläche zwischen den Ausgangsmaterialien im Verbundkörper und eine freie Gestaltung des Verlaufs der Grenzfläche zu ermöglichen, wird vorgeschlagen, einem einzigen Schmelztiegel Ausgangsmaterialien in Teilchenform kontinuierlich zuzuführen und in ihm zu einem Vorkörper aufzuschütten, bei dem an einer im wesentlichen parallel zur Ziehrichtung verlaufenden Grenzfläche Ausgangsmaterial der einen Zusammensetzung unmittelbar neben Ausgangsmaterial einer anderen Zusamensetzung vorliegt und den Vorkörper durch die Ziehdüse abzuziehen. Weiterhin wird eine Vorrichtung zur Durchführung des Verfahrens beschrieben, die einen einzigen Schmelztiegel mit einer an seinem Boden angeordneten Ziehdüse aufweist und bei der zur gezielten Zuführung teilchenförmigen Ausgangsmaterials in einen vorbestimmten Bereich des Schmelztiegels für jede Materialzusammensetzung jeweils eine Leit-Einrichtung vorgesehen ist.

## Beschreibung

Die Erfindung betrifft ein Verfahren zur Herstellung eines länglichen Verbundkörpers aus Glas durch Erschmelzen mindestens zweier in ihrer Materialzusammensetzung unterschiedlicher Ausgangsmaterialien, Zuführen der Ausgangsmaterialien zu einer am Boden eines äußeren Schmelztiegels angeordneten Ziehdüse und kontinuierliches und vertikales Abziehen der Schmelzen aus der Ziehdüse unter Bildung eines quer zur Ziehrichtung geschichteten Verbundkörpers, sie betrifft außerdem eine Vorrichtung zur Herstellung eines länglichen Verbundkörpers aus Glas, mit einem Schmelztiegel, dessen Boden eine Ziehdüse aufweist, und mit einer Zuführvorrichtung für die Zufuhr von mindestens zwei in ihrer Materialzusammensetzung unterschiedlichen Ausgangsmaterialien in den Schmelztiegel.

Ein derartiges Verfahren und eine Vorrichtung zu seiner Durchführung sind beispielsweise aus der DE-OS 27 03 706 bekannt. Darin wird ein Verfahren zur kontinuierlichen Herstellung eines Lichtwellenleiters für die optische Nachrichtentechnik beschrieben, der aus einem Kernglas und einem das Kernglas umhüllenden und eine kleinere Brechzahl als dieses aufweisenden Mantelglas besteht. Der Lichtwellenleiter wird bei diesem Verfahren aus einem sogenannten Doppeltiegel gezogen. Der Doppeltiegel besteht aus einem außen beheizten und die Mantelglas-Schmelze aufnehmenden Außentiegel, in dem konzentrisch ein die Kernglas-Schmelze enthaltender Innentiegel angeordnet ist, dessen Seitenwand über den Schmelzspiegel der Mantelglas-Schmelze hinausragt. Der Boden des Außentiegels ist mit einer Ziehdüse versehen. Senkrecht oberhalb der Ziehdüse ist eine Auslauföffnung im Boden des Innentiegels vorgesehen, wobei die Auslauföffnung des Innentiegels in die Mantelglas-Schmelze hineinragt, so daß die aus dem Innentiegel austretende Kernglas-Schmelze von der Mantelglas-Schmelze allseitig umhüllt aus der Ziehdüse des Außentiegels austritt. Die Beschickung von Innen- und Außentiegel mit den Verbundkörper-Ausgangsmaterialien erfolgt unabhängig und getrennt voneinander durch kontinuierliches Nachführen von aus den Ausgangsmaterialien bestehenden Glasstäben in die jeweilige Schmelze. Sowohl Außen- und Innentiegel bestehen bei der bekannten Vorrichtung aus Platinblech. Es ist bekannt, daß Platin bei Temperaturen von mehr als 900° C beginnt, sich in Gläsern zu lösen. Darüberhinaus ist es möglich, daß Platin-Partikel von den Tiegelwänden abgelöst und von der an den Tiegelwänden entlangfließenden Schmelze mitgerissen werden.

In der EP-A2 0 185 362 ist eine Vorrichtung für die kontinuierliche Herstellung optischer, aus zwei unterschiedlichen Materialien bestehender Fasern beschrieben, bei denen die glasbildenden Verbundkörper-Ausgangsmaterialien und Dotiermittel in reaktionsfähiger und flüssiger Form bei Raumtemperatur einem Doppeltiegel zugeführt werden. Innerer und äußerer Tiegel des Doppeltiegels sind konzentrisch zueinander angeordnet und ihre sich konisch verjüngenden Böden senkrecht übereinander angeordnet. Der innere Tiegel ist innerhalb des äußeren Tiegels in vertikaler Richtung verschiebbar. Der obere Teil des Doppeltiegels, in dem die flüssigen Ausgangsmaterialien unter Bildung einer teilweise verfestigten Masse miteinander reagieren, ist von einem Aushärte-Ofen umgeben, dessen Temperatur von der Raumtemperatur bis auf Aushärte-Temperatur von oben nach unten zunimmt. Der untere Teil des Außentiegels reicht in einen zweiten Ofen, der ebenfalls einen Temperaturgradienten von oben nach unten mit einer Maximaltemperatur im unteren Teil aufweist, die ausreicht, die Verbundmasse so weit zu erweichen, daß aus der Ziehdüse des äußeren Tiegels eine Faser daraus gezogen werden kann.

Die bekannten Verfahren zur Herstellung eines Verbundkörpers aus Glas haben gemeinsam, daß zwei Ausgangsmaterialien zur Herstellung des Verbundkörpers in voneinander getrennten Tiegeln aufgeschmolzen oder gesammelt werden, wobei der eine Tiegel als Innentiegel innerhalb des anderen Tiegels angeordnet ist und zumindest mit einer Auslauföffnung in das zweite, flüssige oder zähflüssige Ausgangsmaterial hineinragt. Dies führt, insbesondere bei hohen Temperaturen und bei aggressiven Ausgangsmaterialien, zu Reaktionen mit dem Material des Innentiegels, die beispielsweise einen Abrieb des Innentiegels oder die Entstehung von Inhomogenitäten, wie Blasen, an der Kontaktfläche von Innentiegel und Verbundkörper-Ausgangsmaterialien zur Folge haben können. Diese Inhomogenitäten oder Verunreinigungen sind nach dem Ziehen des Verbundkörpers an der Grenzfläche zwischen den verschiedenen Ausgangsmaterialien angereichert. Dort sind sie im allgemeinen besonders störend.

Bei den bekannten Verfahren ist die räumliche Verteilung der beiden Ausgangsmaterialien innerhalb des Verbundkörpers durch den Abstand der Auslauföffnung des Innentiegels von der Ziehdüse des Außentiegels zueinander sowie durch eine Änderung der Geometrie der Düsenöffnungen in einem gewissen Rahmen einstellbar. Die hierfür benötigten Doppeltiegelkonstruktionen bzw. die erforderlichen Umbaumaßnahmen sind jedoch aufwendig. Bei der Dimensionierung der Düsenöffnungen ist unter Berücksichtigung der Viskositäten der Schmelzen beim Ziehen außerdem zu beachten, daß diese insbesondere die Auslauföffnung des konzentrisch innerhalb des Außentiegels und damit innerhalb eines relativ kälteren Bereiches der Schmelze, angeordneten Innentiegels, nicht verstopfen.

Werden Innen- und Außentiegel auf einer konstanten Temperatur und in einem festen räumlichen Verhältnis zueinander gehalten, ist die räumliche Verteilung der Ausgangsmaterialien innerhalb des Verbundkörpers eine Funktion der Füllstandshöhen der Schmelzen im jeweiligen Tiegel (bei gleichem Druck über der Schmelze). Für den Fall, daß die räumliche Verteilung der Ausgangsmaterialien im Verbundkörper konstant sein soll, stellt sich damit das Problem, die Höhe der Schmelzspiegel auf konstantem Niveau oder auf einem konstanten Verhältnis zueinander zu halten.

Der Erfindung liegt die Aufgabe zugrunde, ein Verfahren der eingangs genannten Art zur Herstellung eines Verbundkörpers aus Glas anzugeben, das eine homogene und von Verunreinigungen freie Ausbildung der Grenzfläche zwischen den Ausgangsmaterialien im Verbundkörper ermöglicht und bei dem der Verlauf der Verbundkörper-Grenzfläche zwischen den Verbundkörper-Materialien auf einfache Weise und mit großer Freiheit gestaltet werden kann sowie eine einfache und wenig störanfällige Vorrichtung zur Herstellung von Verbundkörpern zur Verfügung zu stellen, die Insbesondere für die Herstellung von Verbundkörpern bei hohen Temperaturen geeignet ist und die eine Gestaltung der Verbundkörper-Grenzfläche auf einfache Weise und mit großer Freiheit ermöglicht .

Diese Aufgabe wird bezüglich des Verfahrens erfindungsgemäß dadurch gelöst, daß einem einzigen Schmelztiegel Ausgangsmaterialien in Teilchenform kontinuierlich zugeführt und in ihm zu einem Vorkörper aufgeschüttet werden, bei dem an einer im wesentlichen parallel zur Ziehrichtung verlaufenden Grenzfläche Ausgangsmaterial der einen Zusammensetzung unmittelbar neben Ausgangsmaterial einer anderen Zusammensetzung vorliegt und der durch die Ziehdüse abgezogen wird. Dadurch, daß die Ausgangsmaterialien einem einzigen Schmelztiegel zugeführt werden und das Aufschütten zu einem Vorkörper derart erfolgt, daß an einer im wesentlichen parallel zur Ziehrichtung verlaufenden Grenzfläche Ausgangsmaterial der einen Zusammensetzung unmittelbar neben Ausgangsmaterial einer anderen Zusammensetzung vorliegt, wird vermieden, daß die Grenzfläche zwischen den Ausgangsmaterialien eine Oberfläche beziehungsweise eine Kontaktfläche zu einem Tiegelmaterial bildet. Verunreinigungen oder Inhomogenitäten der Grenzflächenbereiche des Verbundkörpers, wie sie bei dem bekannten Verfahren etwa durch das Tiegelmaterial verursacht sein können, werden dadurch vollkommen ausgeschlossen. Dadurch, daß die Ausgangsmaterialien dem Schmelztiegel kontinuierlich in Teilchenform zugeführt und darin zu einem Vorkörper aufgeschüttet werden, ist bei einer vorgebbaren, flächenhafter Verteilung der verschiedenen Ausgangsmaterialien jede beliebige räumliche Verteilung der Materialeigenschaften einstellbar, wobei aufgrund des festen Aggregatzustandes der Ausgangsmaterialien beim Zuführen in den Schmelztiegel eine gegenseitige Durchmischung weitgehend vermieden wird. Durch die Verwendung eines gemeinsamen Schmelztiegels für die verschiedenen Ausgangsmaterialien ist deren räumliche Verteilung innerhalb des Verbundkörpers unabhänging von der Höhe der Aufschüttung im Schmelztiegel. Das Aufschmelzen der teilchenförmigen Ausgangsmaterialien im Schmelztiegel erfolgt erst im Bereich des Vorkörpers, also in einem Bereich, in dem an einer Grenzfläche Ausgangsmaterial der einen Zusammensetzung unmittelbar neben Ausgangsmterial einer anderen Zusammensetzung vorliegt und bei einer Temperatur, bei der deren Viskosität im Bereich der Ziehdüse des Schmelztiegels so niedrig ist, daß die Ziehdüse nicht verstopft. Gegebenenfalls kann die Ziehdüse, die von außen leicht zugängig ist, zusätzlich erwärmt werden.

Als besonders vorteilhaft gestaltet sich das Verfahren, bei der Verwendung von Quarzglas oder hochkieselsäurehaltigem Glas als Ausgangsmaterial. Dabei können sich die Ausgangsmaterialien beispielsweise hinsichtlich ihrer Reinheit oder ihrer Dotierstoffkonzentrationen unterscheiden. Aufgrund der geringen Abhängigkeit der Viskosität von der Temperatur werden mit Quarzglas oder hochkieselsäurehaltigem Glas auch bei einem relativ starken Temperaturgradienten innerhalb des Schmelztiegels laminare Strömungsverhältnisse erhalten und Durchmischungen der Ausgangsmaterialien im Bereich der Verbundkörper-Grenzfläche weitgehend vermieden.

Bei einer Zuführung der Ausgangsmaterialien zum Schmelztiegel über konzentrisch zueinander angeordnete Austrittsöffnungen erfolgt die Aufschüttung besonders gleichmäßig, wobei die Austrittsöffnungen, in Zuführrichtung der teilchenförmigen Ausgangsmaterialien gesehen, beliebige Querschnitte aufweisen können. Dadurch werden Durchmischungen der Ausgangsmaterialien weitgehend vermieden.

Als besonders vorteilhaft hat sich ein Verfahren erwiesen, bei dem die Schmelze der Ausgangsmaterialien über eine ringförmig ausgebildete Ziehdüse zu einem mehrschichtigen Rohr gezogen wird, wobei in das Rohr-Innere Gas eingeleitet werden kann.

Es hat sich gezeigt, daß das Zuführen von Ausgangsmaterial mit einer Teilchengröße zwischen 20 µm und 2 mm und insbesondere zwischen 100 µm und 300 µm zum Schmelztiegel besonders vorteilhaft ist. Durch die Verwendung entsprechender rieselfähiger bzw. fließfähiger Körnungen wird einerseits eine gleichmäßige Zufuhr von Ausgangsmaterial in den Schmelztiegel und ein gleichmäßiges Auffüllen des Schmelztiegels gewährleistet und andererseits eine Durchmischung der Körnungen der einzelnen Ausgangsmaterialien im Bereich ihrer Grenzflächen weitgehend vermieden. Diesbezüglich hat es sich als besonders günstig erwiesen, die Teilchengrößenverteilung der Ausgangsmaterialien eines Verbundkörpers möglichst eng und für alle Ausgangsmaterialien etwa gleich zu wählen.

Es hat sich auch als günstig erwiesen, über die Höhe des Schmelztiegels einen Temperaturgradienten mit in Abziehrichtung des Verbundkörpers gesehen zunehmender Temperatur aufrecht zu erhalten. Sowohl die Geschwindigkeit von Diffusionsvorgängen von Bestandteilen des einen Ausgangsmaterials in ein anderes, als auch die Durchmischung des einen Ausgangsmaterials mit einem anderen sind in starkem Maße von der Temperatur im Schmelztiegel abhängig. Durch die Ausbildung eines Temperaturgradienten über die Höhe des Schmelztiegels wird gewährleistet, daß derartige Vorgänge, wenn überhaupt, erst im Bereich unmittelbar um die Ziehdüse ablaufen und eine übermäßige Durchmischung der Ausgangsmaterialien vermieden wird.

Vorteilhafterweise wird das Ausgangsmaterial dem Schmelztiegel vorgeheizt und unter Schutzgas zugeführt. Durch ein Vorheizen des teilchenförmigen Ausgangsmaterials werden oberflächlich gebundene Verunreinigungen, wie beispielsweise Wasser, entfernt. Durch eine Zuführung des Ausgangsmaterials unter Schutzgas in den Schmelztiegel wird ein Angriff gasförmiger Verunreinigungen auf die Ausgangsmaterialien in der heißen Ofenatmosphäre vermieden. Gleichzeitig läßt sich durch den Fluß des Schutzgases, falls erforderlich, ein Überdruck im Schmelztiegel einstellen. Dies hat sich zur Einhaltung eines gleichmäßigen, laminaren Flusses von Ausgangsmaterialien in Richtung der Ziehdüse als vorteilhaft erwiesen. Die Höhe des erforderlichen Überdruckes im Schmelztiegel richet sich beispielsweise nach den Viskositäten der Ausgangsmaterialien im Bereich der Ziehdüse, der eingesetzten Teilchengrößenverteilung und nach der gewünschten Abziehgeschwindigkeit des Verbundkörpers aus dem Schmelztiegel.

Hinsichtliche der Vorrichtung wird die vorstehend genannte Aufgabe dadurch gelöst, daß die Vorrichtung einen einzigen Schmelztiegel mit einer an seinem Boden angeordneten Ziehdüse aufweist und daß zur gezielten Zuführung teilchenförmigen Ausgangsmaterials in einen vorbestimmten Bereich des Schmelztiegels für jede Materialzusammensetzung jeweils eine Leit-Einrichtung vorgesehen ist. Die Vorrichtung, die nur einen einzigen Schmelztiegel aufweist, ist besonders einfach und wenig störanfällig. Hinzu kommt, daß die einzige Auslauföffnung für die Schmelzen der Ausgangsmaterialien nämlich die Ziehdüse am Boden des Schmelztiegels gut zugänglich angeordnet und gegebenenfalls leicht zu reinigen oder auszuwechseln ist. Dadurch, daß zur gezielten Zuführung von teilchenförmigem Ausgangsmaterial in einen vorbestimmten Bereich des Schmelztiegels für jede Materialzusammensetzung jeweils eine Leit-Einrichtung vorgesehen ist, läßt sich der Grenzflächen-Verlauf zwischen den Ausgangsmaterialien innerhalb des Schmelztiegels und damit auch zwischen den Materialien im Verbundkörper auf einfache Weise und mit großer Freiheit gestalten. Unter einer Leit-Einrichtung wird hierbei eine Vorrichtung verstanden, mit der es möglich ist, die Ausgangsmaterialien für jede Zusammensetzung gezielt und flächenhaft innerhalb des Schmelztiegels zu verteilen, die aber während des Schmelzens selbst außerhalb des Schmelztiegels oder zumindest oberhalb der Schmelze angeordnet ist.

Für eine gleichmäßige Aufschüttung im Schmelztiegel und eine gezielte Zuführung der Ausgangsmaterialien hat sich insbesondere eine Zuführ-Vorrichtung bewährt, die mindestens an ihrem, dem Schmelztiegel zugewandten Ende koaxial zueinander angeordnete Leit-Rohre aufweist, wobei die Ausgangsmaterialien über die Rohröffnungen bzw. den Spalt oder den Spalten zwischen den konzentrisch zueinander angeordneten Rohren dem Schmelztiegel zugeführt werden.

Eine besonders einfache Möglichkeit um die räumliche Verteilung der Ausgangsmaterialien im Schmelztiegel einzustellen, besteht bei einer Zuführ-Vorrichtung, bei der die Leit-Rohre in vertikaler Richtung verschiebbar gehalten sind. Dabei sind die Leit-Rohre vorteilhafterweise sowohl bis zum Boden des Schmelztiegels als auch gegeneinander verschiebbar.

Dadurch, daß die dem Schmelztiegel zugewandten Rohrenden sich konisch erweiternd oder sich konisch verjüngend ausgebildet sind, wobei im Bereich des konischen Verlaufes der maximale Außendurchmesser eines inneren Rohres größer ist als der minimale Innendurchmesser des benachbarten und weiter außen liegenden Leit-Rohres, ist es möglich, durch vertikales Verschieben der Leit-Rohre gegeneinander die Spaltöffnungen zwischen den Rohren und damit die Zuführmenge der verschiedenen Ausgangsmaterialien auf einfache Weise zu variieren.

Es hat sich eine Ausführungsform der Vorrichtung bewährt, bei der die Ziehdüse am Boden des Schmelztiegels mit einer ringförmigen Auslauföffnung versehen ist, wobei sich zentrisch zu dieser Auslauföffnung durch den Schmelztiegel ein Gaszuführungsrohr erstreckt. Der kreisförmige Mittelteil der Ziehdüse kann dabei besonders einfach mittels des unteren Endes des Gaszuführungsrohres gehalten werden kann, er kann aber auch über mehrere Stege mit dem Außenring der Ziehdüse verbunden sein. Diese Ausführungsform der Vorrichtung zur Herstellung eines Verbundkörpers aus Glas eignet sich für die Herstellung eines Verbundkörpers in Form eines mehrschichtigen Rohres.

Bei einer bevorzugten Ausführungsform der Vorrichtung ragt die Ziehdüse in einen mit Schutzgas gespülten und in Ziehrichtung offenen Kammerraum hinein. Dieser Kammerraum verhindert einen Zutritt feuchter oder reaktiver Atmosphäre zu der noch heißen Oberfläche des Verbundkörpers während dessen erster Abkühlphase.

Als besonders wenig störanfällig, einfach zu warten und abriebfest haben sich Schmelztiegel erwiesen, die Wolfram oder Molybdän enthalten. Gegebenenfalls müssen die Schmelztiegel-Wandungen vor dem Angriff reaktiver Gase geschützt werden. Mit Hinblick darauf ist es günstig, den Schmelztiegel verschließbar auszubilden. Ein Eindringen von Feuchtigkeit oder von Gasen, die mit dem heißen Schmelztiegel-Material reagieren wird dadurch vermieden. Außerdem kann im Bedarfsfall auch ein Überdruck im Schmelztiegel aufrecht erhalten werden.

Ein Ausführungsbeispiel der Erfindung ist in der Zeichnung dargestellt und wird nachstehend näher erläutert. In der Zeichnung zeigt
- Figur 1: eine schematische Darstellung einer Vorrichtung zur Herstellung eines rohrförmigen Verbundkörpers und
- Figur 2: eine schematische Darstellung einer Vorrichtung zur Herstellung eines stabförmigen Verbundkörpers

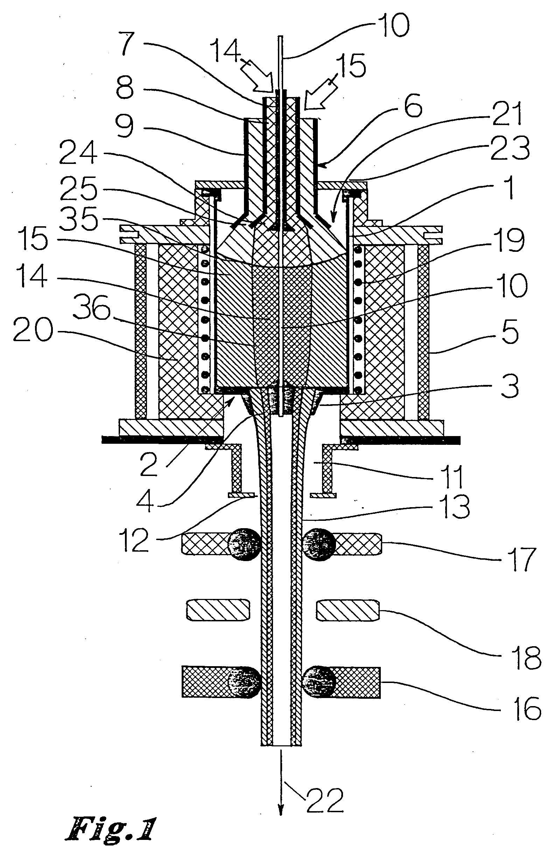

Die in Figur 1 dargestellte Vorrichtung weist einen Schmelztiegel 1 auf, dessen Boden 2 mit einer Ziehdüse 3 versehen ist. In der Ziehdüse 3 ist eine ringförmige Auslauföffnung 4 vorgesehen. Oberhalb des Schmelztiegels 1, der sich innerhalb eines beheizbaren Ringofens 5 befindet, ist eine Zuführvorrichtung 6 für teilchenförmiges Material angeordnet. Die Zuführvorrichtung 6 weist im wesentlichen drei koaxial ineinander angeordnete in vertikaler Richtung zueinander verschiebbare Leit-Rohre 7, 8, 9 auf, deren dem Schmelztiegel 1 zugewandte Enden sich konisch erweitern oder sich konisch verjüngen, wobei jeweils im Bereich des konischen Endes der maximale Außendurchmesser jedes inneren Leit-Rohres 7,8 größer ist, als der minimale Innendurchmesser des benachbarten und weiter außen liegenden Leit-Rohres 8, 9. Die Leit-Rohre 7, 8, 9 dienen als Leit-Einrichtung für das dem Schmelztiegel 1 zuzuführende, teilchenförmige Ausgangsmaterial 14, 15. Innerhalb des Innersten Leit-Rohres 7 verläuft eine Zuführleitung 10 für Schutzgas, die sich durch den Schmelztiegel 1 und durch die Ziehdüse 3 bis in einen Kammerraum 11 erstreckt, in den auch die Ziehdüse 3 hineinragt. Der Kammerraum 11 weist an seiner der Ziehdüse 3 abgewandten Seite eine Öffnung 12 auf, durch die der Verbundkörper 13 mittels einer Ziehvorrichtung 16 abgezogen wird. Dabei durchläuft der abgezogene Verbundkörper 13 eine Führungsvorrichtung 17 und eine Dickenmeßeinrichtung 18. Der Schmelztiegel 1 besteht aus Wolfram und ist mit einer Abdeckplatte 23, durch die die Leit-Rohre 7, 8, 9 der Zuführvorrichtung 6 vakuumdicht hindurchgeführt sind, druckdicht verschließbar. Die Heizelemente 19 sind nach außen hin durch eine thermische Isolationsschicht 20 abgeschlossen.

Nachfolgend wird das erfindungsgemäße Verfahren zur Herstellung eines Verbundkörpers aus Glas unter Verwendung der in Figur 1 dargestellten Vorrichtung beispielhaft beschrieben. Über die Leitrohre 8, 9 werden dem Schmelztiegel 1 zwei in ihrer Materialzusammensetzung unterschiedliche Ausgangsmaterialien 14, 15 zugeführt. Bei den Ausgangsmaterialien 14,15 handelt es sich um teilchenförmiges Quarzglas mit einer Teilchengrößenverteilung zwischen 100 µm und 300 µm. Über das Leit-Rohr 9 wird dem Schmelztiegel 1 ein Ausgangsmaterial 15 aus natürlichem Quarzglas, über das Leit-Rohr 8 ein Ausgangsmaterial 14 aus hochreinem, synthetischem Quarzglas zugeführt. Mittels der Leit-Rohre 7,8,9 lassen sich die Quarzglas-Ausgangsmaterialien 14,15 in einen vorgebbaren Bereich des Schmelztiegels 1 zuführen. Dabei wird im Schmelztiegel 1 kontinuierlich ein Vorkörper 21 aufgeschüttet, bei dem an einer im wesentlichen parallel zur Ziehrichtung, die mit dem Richtungspfeil 22 gekennzeichnet ist, verlaufenden Grenzfläche 36, Quarzglasteilchen der einen Zusammensetzung 14 unmittelbar neben Quarzglasteilchen der anderen Zusammensetzung 15 vorliegen. Der Vorkörper 21 wird im Schmelztiegel 1 unter Ausbildung einer unterhalb der Zuführvorrichtung 6 verlaufenden Schmelzfront 35 erhitzt, wobei die Temperatur des Ringofens 5 zwischen 1800 °C und 2300 °C liegt. Die Viskosität des Vorkörpers 21 wird dadurch im unteren Bereich des Schmelztiegels 1 derart erniedrigt, daß der Vorkörper 21 der Ziehdüse 3 zugeführt und durch diese mit einer Ziehgeschwindigkeit zwischen 2 m/h und 3 m/h in Ziehrichtung 22 als rohrförmiger Verbundkörper 21 mit einem Außendurchmesser von 150 mm und einer Wandstärke von 20 mm abgezogen wird.

Das Dickenverhältnis der Schichten des Verbundkörpers 13 ist abhängig vom Mengenverhältnis der dem Schmelztiegel 1 zugeführten Ausgangsmaterialien 14, 15. Dieses Mengenverhältnis ist durch Verschieben der Leit-Rohre 7, 8, 9 in vertikaler Richtung und der dadurch bedingten Änderung der Spaltöffnungen 24, 25 zwischen den jeweiligen Leit-Rohren 7, 8, 9 auf einen Wert zwischen 0 % und 100% einstellbar. So kann beispielsweise zu Beginn des Herstellprozeßes, bei leerem Schmelztiegel 1, das innerste Leitrohr 7 bis auf die konisch sich verjüngende Innenoberfläche des Leitrohres 8 abgesenkt, dadurch der Spalt 24 zwischen den Leitrohren 7,8 verschlossen und die Zufuhr der Quarzglasteilchen 14 aus dem Leit-Rohr 8 in den Schmelztiegel 1 verhindert werden. Gleichzeitig kann durch Heben des mittleren Leit-Rohres 8 der Spalt 25 zwischen der Außenseite des Leitrohres 8 und dem nach innen sich verjüngenden Innenquerschnittes des Leitrohres 9 vergrößert werden. Dem Schmelztiegel 1 wird dadurch zunächst nur die billigere Quarzglasqualität zugeführt und dieser mit den entsprechenden Quarzglasteilchen 15 aufgefüllt, bevor der Spalt 24 zwischen der Innenseite des Leit-Rohres 8 und der Außenseite des Leit-Rohres 7 geöffnet wird. Diese erste Tiegelfüllung wird im Vorlauf abgezogen, währenddem sich auch das thermische Gleichgewicht innerhalb des Schmelztiegels 1 einstellt. Es ist aber auch möglich, die Leit-Rohre 7, 8, 9 zu Beginn des Herstellprozesses für den Verbundkörper 13 bis auf den Boden 2 des Schmelztiegels 1 abzusenken und unter Bildung des Vorkörpers 21 durch kontinuierliches Zuführen der Quarzglasteilchen 14, 15 durch die Spalte 24, 25, allmählich bis auf die gewünschte Höhe des Vorkörpers 21 anzuheben.

Mit dem beschriebenen Verfahren ist es beispielsweise möglich, Verbundrohre mit einer hochreinen synthetischen Quarzglas-Innenschicht und einer Quarzglas-Außenschicht aus natürlichem Rohstoff, zur Verwendung als Diffusionsrohr für die Halbleiterproduktion, herzustellen. Ein anderes Anwendungsbeispiel ist, bei Verwendung entsprechender Glas-Zusammensetzungen, die Herstellung von Verbundrohren aus Quarzglas mit einer dotierten Außenschicht und einer undotierten Innenschicht für die Hüllrohre von Lampen.

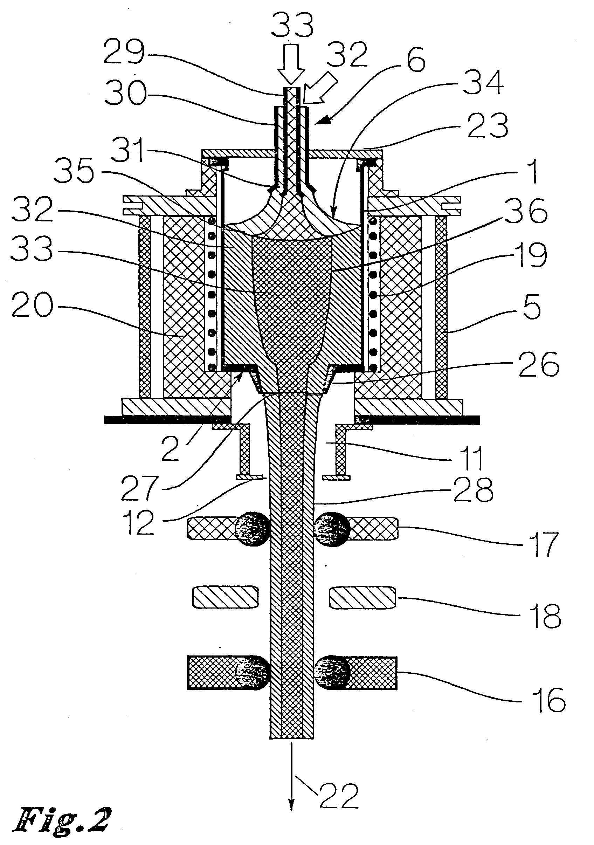

Bei der in Figur 2 dargestellten Ausführungsform der erfindungsgemäßen Vorrichtung ist die am Boden 2 des Schmelztiegels 1 angeordnete Ziehdüse 26 mit einer kreisförmigen Öffnung 27 versehen. Aus der kreisförmigen Öffnung 27, die einen Durchmesser von 100 mm aufweist, wird mittels der Ziehvorrichtung 16 ein stabförmiger Verbundkörper 28 gezogen. Die Zuführvorrichtung 6 weist bei dieser Ausführungsform zwei koaxial zueinander angeordnete und vertikal gegeneinander verschiebbare Leit-Rohre 29, 30 auf, deren untere, dem Schmelztiegel 1 zugewandte Enden, jeweils konisch verbreitert sind. Der maximale Außendurchmesser des inneren Rohres 29 ist größer gewählt als der Innendurchmesser des äußeren Rohres 30, so daß der Spalt 31 zwischen den beiden Leit-Rohren 29, 30 durch Hochziehen des inneren Leit-Rohres 29 verschließbar ist. Über den Spalt 31 zwischen den Leit-Rohren 29, 30 wird dem Schmelztiegel 1 reines, synthetisches teilchenförmiges Quarzglas 32 und über das Leit-Rohr 29, teilchenförmiges, mit Germanium dotiertes Quarzglas 33 zugeführt und im Schmelztiegel 1 zu einem Vorkörper 34 aufgeschüttet. Dabei wird das teilchenförmige Quarzglas-Ausgangsmaterial 32, 33 dem Schmelztiegel 1 unter Schutzgas und auf eine Temperatur von ca. 500 ° C vorgeheizt zugeführt. Durch das Vorheizen wird an den Quarzglas-Teilchen 32, 33 haftendes Wasser vor dem Einbringen des Ausgangsmaterials 32, 33 in den Schmelztiegel 1 entfernt. Im Schmelztiegel 1, der mit einer Abdeckplatte 23 druckdicht verschlossen ist, wird durch das Einbringen des Ausgangsmaterials 32, 33 unter Schutzgas und durch das Ausdehnen des Schutzgases ein Überdruck aufrecht erhalten. Der Vorkörper 34 wird im Bereich der Ziehdüse 26 auf eine Temperatur von ca. 2.200° C aufgeheizt.

In den Figuren 1 und 2 sind einander entsprechende Bauteile mit der gleichen Bezugsziffer bezeichnet. Die in Figur 2 nicht näher erläuterten Teile der Vorrichtung können daher den entsprechenden Bezugsziffern und deren Erläuterung in Figur 1 zugeordnet werden. Mit der in Figur 2 dargestellten Vorrichtung sind beispielsweise Vorformen herstellbar aus denen Lichtwellenleiter für die optische Nachrichtentechnik gezogen werden können.

## Patentansprüche

1. Verfahren zur Herstellung eines länglichen Verbundkörpers aus Glas durch Erschmelzen mindestens zweier in ihrer Materialzusammensetzung unterschiedlicher Ausgangsmaterialien, Zuführen der Ausgangsmaterialien zu einer am Boden eines äußeren Schmelztiegels angeordneten Ziehdüse und kontinuierliches und vertikales Abziehen der Schmelzen aus der Ziehdüse unter Bildung eines quer zur Ziehrichtung geschichteten Verbundkörpers, dadurch gekennzeichnet, daß einem einzigen Schmelztiegel (1) Ausgangsmaterialien (14; 15) in Teilchenform kontinuierlich zugeführt und in ihm zu einem Vorkörper (21; 34) aufgeschüttet werden, bei dem an einer im wesentlichen parallel zur Ziehrichtung (22) verlaufenden Grenzfläche (36) Ausgangsmaterial (14) der einen Zusammensetzung unmittelbar neben Ausgangsmaterial (15) einer anderen Zusammensetzung vorliegt und der durch die Ziehdüse (3; 26) abgezogen wird.

2. Verfahren nach Anspruch 1, dadurch gekennzeichnet, daß als Ausgangsmaterial (14; 15) Quarzglas oder hochkieselsäurehaltiges Glas gewählt wird.

3. Verfahren nach Anspruch 1 oder 2, dadurch gekennzeichnet, daß die Ausgangsmaterialien (14; 15) dem Schmelztiegel (1) über konzentrisch zueinander angeordneten Austrittsöffnungen (24; 25) zugeführt werden.

4. Verfahren nach einem der Ansprüche 1 bis 3, dadurch gekennzeichnet, daß die Ausgangsmaterialien (14; 15) über eine ringförmig ausgebildete Ziehdüse (3) zu einem doppelwandigen Rohr (13) gezogen werden.

5. Verfahren nach Anspruch 4, dadurch gekennzeichnet, daß in das Rohr-Innere Gas eingeleitet wird.

6. Verfahren nach einem der Ansprüche 1 bis 5, dadurch gekennzeichnet, daß Ausgangsmaterial (14; 15) mit einer Teilchengröße zwischen 20 µm und 2 mm eingesetzt wird.

7. Verfahren nach Anspruch 6, dadurch gekennzeichnet, daß die Teilchengröße zwischen 100 µm und 300 µm gewählt wird.

8. Verfahren nach einem der Ansprüche 1 bis 7, dadurch gekennzeichnet, daß über die Höhe des Schmelztiegels (1) ein Temperaturgradient mit in Abziehrichtung (22) des Verbundkörpers (13; 28) gesehen zunehmender Temperatur aufrecht erhalten wird.

9. Verfahren nach einem der Ansprüche 1 bis 8, dadurch gekennzeichnet, daß das Ausgangsmaterial (14; 15) dem Schmelztiegel (1) vorgeheizt und/oder unter Schutzgas zugeführt wird.

10. Verfahren nach einem der Ansprüche 1 bis 9, dadurch gekennzeichnet, daß die Ausgangsmaterialien (14; 15) im Schmelztiegel (1) mit einem Überdruck beaufschlagt werden.

11. Vorrichtung zur Herstellung eines länglichen Verbundkörpers aus Glas, mit einem Schmelztiegel, dessen Boden eine Ziehdüse aufweist, und mit einer Zuführvorrichtung für die Zufuhr von mindestens zwei in ihrer Materialzusammensetzung unterschiedlichen Ausgangsmaterialien in den Schmelztiegel, dadurch gekennzeichnet, daß die Vorrichtung einen einzigen Schmelztiegel (1) mit einer an seinem Boden angeordneten Ziehdüse (3; 26) aufweist und daß zur gezielten Zuführung teilchenförmigen Ausgangsmaterials (14; 15) in einen vorbestimmten Bereich des Schmelztiegels (1) für jede Materialzusammensetzung jeweils eine Leit-Einrichtung (6) vorgesehen ist.

12. Vorrichtung nach Anspruch 11, dadurch gekennzeichnet, daß die Zuführvorrichtung (6) Leit-Rohre (7; 8; 9) aufweist, die mindestens mit ihren, dem Schmelztiegel (1) zugewandten Endbereichen koaxial zueinander angeordnet sind.

13. Vorrichtung nach Anspruch 12, dadurch gekennzeichnet, daß die Leit-Rohre (7; 8; 9) in vertikaler Richtung verschiebbar gehalten sind.

14. Vorrichtung nach Anspruch 12 oder 13, dadurch gekennzeichnet, daß die dem Schmelztiegel (1) zugwandten Rohrenden sich konisch erweiternd oder sich konisch verjüngend ausgebildet sind, wobei der maximale Außendurchmesser eines inneren Rohres (7; 8) größer ist als der minimale Innendurchmesser des benachbarten und weiter außen liegenden Rohres (8; 9).

15. Vorrichtung nach einem der Ansprüche 11 bis 14, dadurch gekennzeichnet, daß die Ziehdüse (3) mit einer ringförmigen Auslauföffnung ausgebildet ist.

16. Vorrichtung nach Anspruch 15, dadurch gekennzeichnet, daß sich von außerhalb des Schmelztiegels (1) durch die Ziehdüse (3) konzentrisch zur Auslauföffnung ein Gaszuführungsrohr (10) erstreckt.

17. Vorrichtung nach einem der Ansprüche 11 bis 16, dadurch gekennzeichnet, daß die Ziehdüse (3) in einen gasgespülten und in Ziehrichtung (22) offenen Kammerraum (11) hineinragt.

18. Vorrichtung nach einem der Ansprüche 11 bis 17, dadurch gekennzeichnet, daß der Schmelztiegel (1) aus Wolfram oder Molybdän besteht.

19. Vorrichtung nach einem der Ansprüche 11 bis 18, dadurch gekennzeichnet, daß der Schmelztiegel (1) verschließbar ausgebildet ist.
